# EUROPEAN PATENT APPLICATION

(11) **EP 2 693 342 A1**
(43) Date of publication of application: **05.02.2014**
(21) Application number: 12195605.6
(22) Date of filing: 05.12.2012
(51) Int. Cl.: G06F 13/38

(54) **Data routing system supporting dual master apparatuses**

(30) Priority: 30.07.2012 TW 101127466
(71) Applicant: Acer Incorporated, New Taipei City 221 (TW)
(72) Inventor: Yeung, Sip Kim, 221 New Taipei City (TW)
(74) Representative: Chamberlain, Alan James

(57) **Abstract**

A data routing system supporting dual master apparatuses is provided. The system includes a first master apparatus, a second master apparatus, at least one first-type interface apparatus, and at least one second-type interface apparatus, which are connected in a daisy chain manner. The first master apparatus provides data transmission of a first channel and a second channel. The second master apparatus transmits data with the first master apparatus through the first channel by using a peer-to-peer data transmission method and bypasses data of the second channel. The first-type interface apparatus transmits data with the first master apparatus through the second channel, and the second-type interface apparatus transmits data with the second master apparatus through the first channel.

## Description

### CROSS-REFERENCE TO RELATED APPLICATION

This application claims the priority benefit of Taiwan application serial no. 101127466, filed on July 30, 2012. The entirety of the above-mentioned patent application is hereby incorporated by reference herein and made a part of this specification.

### BACKGROUND OF THE INVENTION

### Field of the Invention

The invention is related to a data routing system and a data routing method and more particularly, to a data routing system supporting dual master apparatuses for data access.

### Description of Related Art

With the development of technology, computer functions tend to be more various, and numerous peripheral equipments have been launched to the market. For users' convenience to upgrade computer performance or expand computer functions, bus slots, such as accelerated graphics port (AGP) slots, peripheral component interconnect (PCI) slots or PCI express (PCI-E) slots, are commonly disposed on motherboard of the computer for the users to insert expansion cards, such as a video card, an audio card, or a network card. In addition, expansion interfaces, such as a firewire or a universal serial bus (USB) are also disposed on the computer host for the users to connect external apparatuses, such as a hard disk or a printer.

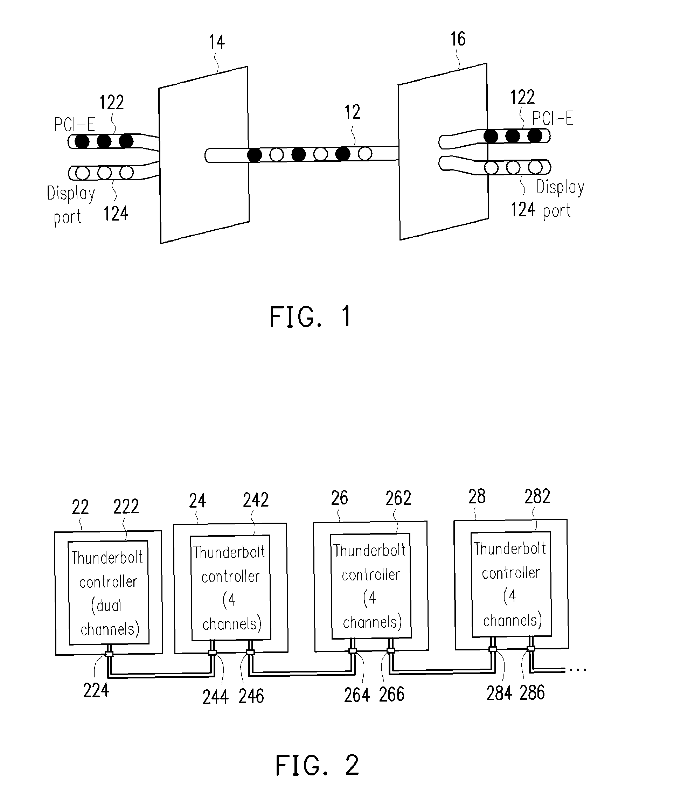

Recently, Intel Corporation from United State has released a whole new Thunderbolt interface which integrates PCI express (PCI-E) and DisplayPort technologies together, so as to transmit data and video streaming through a single cable simultaneously. FIG. 1 is a diagram illustrating the data transmission via the Thunderbolt interface. Referring to FIG. 1, the Thunderbolt transmission technology provides two channels 122 and 124 on a cable 12 to serve as the PCI-E and the DisplayPort for respectively transmitting data and video streaming. Relying on the control of two Thunderbolt controllers 14 and 16 disposed at two ends of the cable 12, the transmission rate of each channel may reach up to 10 Gb/s in both directions, which allows high speed data transmission between the computer and peripherals. The bandwidth provided by the Thunderbolt technology allows several high speed apparatuses to be daisy chained without a hub or a switch.

For example, FIG. 2 is a conventional daisy-chain architecture of the Thunderbolt interface. Referring to FIG. 2, in order to implement a daisy-chain cascading connection, a host 22, as a master terminal, requires a Thunderbolt interface port 222 and a Thunderbolt controller 224 supporting dual-channel transmission. The downstream cascaded Thunderbolt interface apparatuses 24, 26, and 28 are required to respectively equip two or more Thunderbolt interface ports 242, 244, 262, 264, 282, and 284. Since each of the Thunderbolt interfaces has two channels, the Thunderbolt controllers 246, 266, and 286 in the Thunderbolt interface apparatuses 24, 26, and 28 are required to support data transmission of four channels. Therefore, the production costs of the interface apparatus are increased.

However, the two channels of current Thunderbolt interface are respectively configured for data transmission and video streaming, and Thunderbolt interface does not support channel aggregation, and hence, the transmission efficiency are limited. When the Thunderbolt apparatuses cascaded by the user do not include a display related device, the video streaming channel of the Thunderbolt device will be idle. In this case, the costly Thunderbolt interface port and controller can only supply half transmission efficiency, which is waste of resources. Furthermore, the current daisy-chain architecture does not allow co-existence of dual master apparatuses, and only supports data transmission between a single master apparatus and other cascaded peripherals. As a result, the application range of the Thunderbolt apparatus is limited.

### SUMMARY OF THE INVENTION

Accordingly, the invention provides a data routing system supporting dual master apparatuses to access data in interface apparatuses that are cascaded with the master apparatuses.

The invention provides a data routing system supporting dual master apparatuses, which includes a first master apparatus, second master apparatus, at least one first-type interface apparatus and at least one second-type interface apparatus. The first master apparatus has a first controller and a first interface port. The first controller provides data transmission of a first channel and a second channel through the first interface port. The second master apparatus has a second controller, a second interface port and a third interface port. The second interface port is cascaded with the first interface port. The second controller is connected with the second interface port and the third interface port to transmit data with the first controller through the first channel. The third interface port is connected with the second interface port to transmit data of the second channel. Each of the first-type interface apparatuses has a third controller, a fourth interface port and a fifth interface port. The fourth interface port is cascaded with the third interface port. The third controller is connected with the fourth interface port and the fifth interface port to transmit data with the first master apparatus through the second channel. The fifth interface port is connected with the fourth interface port to transmit data of the first channel. Each of the second-type interface apparatuses has a fourth controller, a sixth interface port and a seventh interface port. The sixth interface port is cascaded with the fifth interface port. The fourth controller is connected with the sixth interface port and the seventh interface port to transmit data with the second master apparatus through the first channel. The seventh interface port is connected with the sixth interface port to transmit the data of the second channel. The first controller transmits data with the second controller through the first channel by using a peer-to-peer data transmission method.

To sum up, the data routing system supporting dual master apparatuses of the invention modifies the design of the Thunderbolt interface apparatus by using two channels of the Thunderbolt interface for data transmission. Besides, by using a peer-to-peer data transmission method for data transmission between two master apparatuses, the master apparatuses can access data in the interface apparatuses that are cascaded with the master apparatuses.

In order to make the aforementioned and other features and advantages of the invention more comprehensible, embodiments accompanying figures are described in detail below.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.

FIG. 1 is a diagram illustrating data transmission via the Thunderbolt interface.

FIG. 2 is a conventional daisy-chain architecture of the Thunderbolt interface.

FIG. 3 is a block diagram illustrating a data routing system supporting dual master apparatuses according to an embodiment of the invention.

FIG. 4 is a block diagram illustrating a data routing system supporting dual master apparatuses according to an embodiment of the invention.

FIG. 5 is a schematic diagram illustrating address mapping according to an embodiment of the invention.

FIG. 6 is a schematic diagram illustrating peer-to-peer data transmission according to an embodiment of the invention.

### DESCRIPTION OF EMBODIMENTS

Reference will now be made in detail to the present embodiments of the invention, examples of which are illustrated in the accompanying drawings. Wherever possible, the same reference numbers are used in the drawings and description to refer to the same or like part.

The embodiments of the present invention utilize the high-bandwidth and the daisy-chain characteristics of the Thunderbolt interface for transmitting data by using two data transmission channels of the Thunderbolt interface. Two types of interface apparatuses are designed to process data of one of the two channels, and bypass data of the other channel, which is provided for another cascaded interface apparatus to process. Therefore, not only the transmission efficiency of the two channels can be utilized effectively, but the system can support fault-tolerance function. By cascading the interface apparatuses with two cascaded master apparatuses, two device links are accordingly formed. In the invention, for the interface apparatuses cascaded with one of the master apparatuses, an address mapping table of data stored in the interface apparatuses is further established. Thus, the other master apparatus can read the address mapping table so as to access the data of the interface apparatuses by using a peer-to-peer data transmission method. Accordingly, the dual master apparatuses can access data in the interface apparatuses that are cascaded therewith.

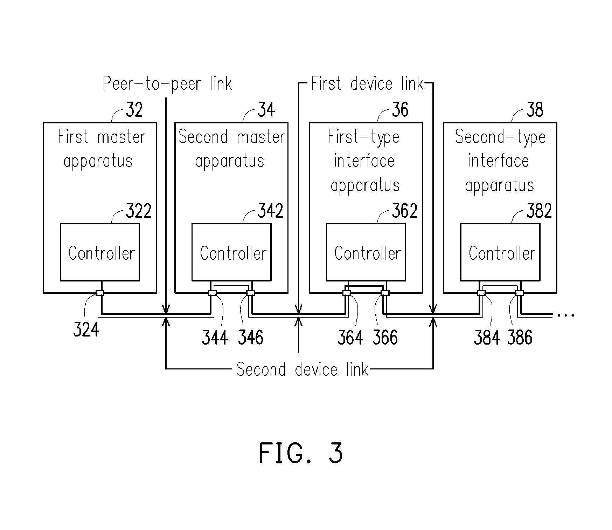

FIG. 3 is a block diagram illustrating a data routing system supporting dual master apparatuses according to an embodiment of the invention. Referring to FIG. 3, a data routing system of the present embodiment includes a first master apparatus 32, a second master apparatus 34, a first-type interface apparatus 36 and a second-type interface apparatus 38, and functions thereof are respectively described hereinafter.

The first master apparatus 32 and the second master apparatus 34 may be desktop computers, notebook computers, workstations or other terminal apparatuses, each of which includes a processor and various input and output interfaces so as to connect with peripherals and process programs executed by users. The first master apparatus 32 and the second master apparatus 34 may also include storages, such as a memory or a hard-drive, to store programs to be executed by the processor or other data.

The first master apparatus 32 includes a controller 322 and an interface port 324, and the controller 322 provides data transmission of a first channel and a second channel through the interface port 324. The controller 322 is, for example, a Thunderbolt controller supporting dual-channel data transmission of Thunderbolt interface, which may provide the dual-channel data transmission through the interface port 324.

The second master apparatus 34 includes a controller 342, an interface port 344 and an interface port 346. The interface port 344 is cascaded with the interface port 324. The controller 342 is, for example, also a Thunderbolt controller supporting dual-channel data transmission of Thunderbolt interface, which is connected with the interface port 344 and the interface port 346 to transmit data with the controller 322 of the first master apparatus 32 through the first channel. The interface port 346 is connected with the interface port 344 to transmit data of the second channel. The controller 342 transmits data with the controller 322 through the first channel by using a peer-to-peer data transmission method, for example, so as to form a peer-to-peer link.

The first-type interface apparatus 36 and the second-type interface apparatus 38 are, for example, graphics processing apparatuses including graphics processing units (GPUs), display apparatuses, storage apparatuses, recordable apparatuses or other peripherals utilizing a Thunderbolt interface, a universal serial bus (USB) 3.0 interface or a 10GB Ethernet interface to cascade with the first master apparatus 32 and the second master apparatus 34 for data transmission.

The first-type interface apparatus 36 includes a controller 362, an interface port 364 and an interface port 366. The interface port 364 is cascaded with the interface port 346 of the second master apparatus 34. The controller 362 is connected with the interface port 364 and the interface port 366 to transmit data with the first master apparatus 32 through the second channel. The interface port 366 is connected with the interface port 364 to transmit data of the first channel. The first master apparatus 32 transmits data with the first-type interface apparatus 36 by using the second channel, so as to form a second device link.

The second-type interface apparatus 38 includes a controller 382, an interface port 384 and an interface port 386. The interface port 384 is cascaded with the interface port 366 of the first-type interface apparatus 36. The controller 382 is connected with the interface port 384 and the interface port 386 to transmit data with the second master apparatus 34 through the first channel. The interface port 386 is connected with the interface port 384 to transmit the data of the second channel. The second master apparatus 34 transmits data with the second-type interface apparatus 38 by using the first channel, so as to form a first device link.

It should be mentioned that the aforementioned structure where the first-type interface apparatus 36 is cascaded with the second master apparatus 34 and the second-type interface apparatus 38 is cascaded with the first-type interface apparatus 36 is only an example for illustration. In other embodiments, the first-type interface apparatus 36 may be also cascaded with another first-type interface apparatus or with the second-type interface apparatus via the interface port 364. Additionally, the second-type interface apparatus 38 may be cascaded with the first-type interface apparatus or with another second-type interface apparatus via the interface port 384. In short, the sequence and the number (a Thunderbolt interface supports up to 8 devices cascaded) of the first-type interface apparatuses 36 and the second-type interface apparatuses 38 cascaded with the second master apparatus 34 are not limited to the present embodiment.

In addition, in an embodiment, the second master apparatus 34 may be further configured as a cloud server, which enables an external device to perform data access on the interface apparatus (i.e. second-type interface apparatus 38) cascaded therewith. A communication module (not shown) may be further disposed in the second master apparatus 34 and is connected with the controller 342 for establishing a communication link between the second master apparatus 34 and the external device (not shown) and receiving a data access request for the interface apparatus from the external device. The communication module is, for example, a wireless transceiver supporting wireless communication standards, such as the Institute of Electrical and Electronics Engineers (IEEE) 802.11n/b/g, which enables the second master apparatus 34 to establish internet connection with the external device in a wireless manner. The communication module may be also a network card supporting wired network connection, and the present invention is not limited thereto.

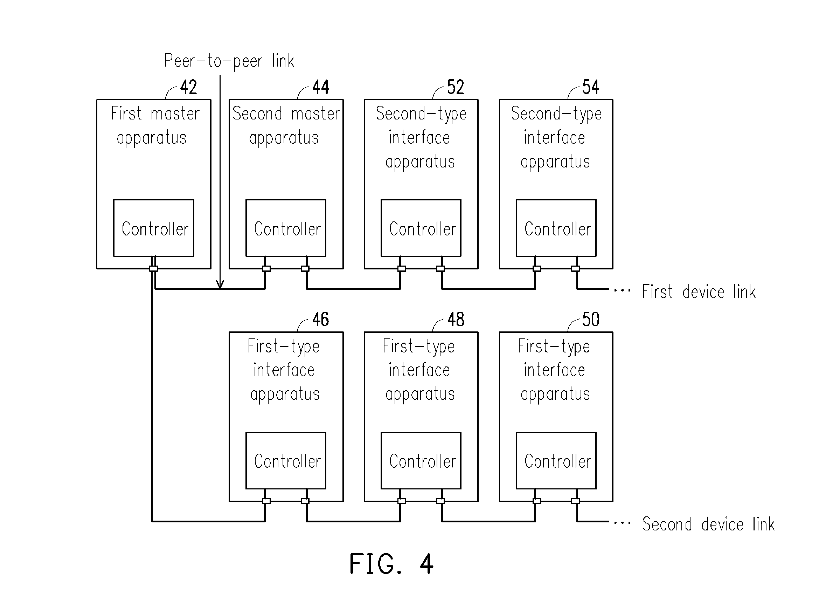

For instance, FIG. 4 is a block diagram illustrating a data routing system supporting dual master apparatuses according to an embodiment of the invention. Referring to FIG. 4, the system structure depicted in FIG. 3 is adopted by the present embodiment, and a second master apparatus 44, first-type interface apparatuses 46, 48 and 50 and a second-type interface apparatus 52 cascaded with the first master apparatus 42 are separately described according to data transmission paths of a first channel and a second channel. The first master apparatus 42 transmits data with the second master apparatus 44 by adopting a peer-to-peer data transmission method so as to form a peer-to-peer link. The second master apparatus 44 transmits data with the second-type interface apparatuses 52 and 54 by adopting the first channel so as to form a first device link. The first master apparatus 42 transmits data with the first-type interface apparatuses 46, 48 and 50 by adopting the second channel so as to form a second device link. The second master apparatus 44 may be configured as a cloud server to provide the second-type interface apparatuses 52 and 54 cascaded therewith for external devices to access. Thus, the first device link may be considered as a cloud device link. Moreover, the first master apparatus 42 merely allows local users to use the first-type interface apparatuses 46, 48 and 50 cascaded therewith, and thus, the second device link may be considered as a local device link.

It should be mentioned that in the system structure of FIG. 3, in order to allow the first master apparatus 32 to access the second-type interface apparatus 38 cascaded with the second master apparatus 34, an address mapping table of the data stored in the second-type interface apparatus 38 is further established on the second master apparatus 34, so as to enable the first master apparatus 32 to access the data in the second-type interface apparatus 38 by reading the address mapping table.

In detail, the controller 342 of the second master apparatus 34 obtains a storage address of data in each of the second-type interface apparatuses 38 so as to establish an address mapping table, in which the address mapped to the storage address of each second-type interface apparatus 38 is continuous in the address mapping table. Accordingly, the controller 322 of the first master apparatus 32 may access the data stored in the second-type interface apparatus 38 by reading the address mapping table.

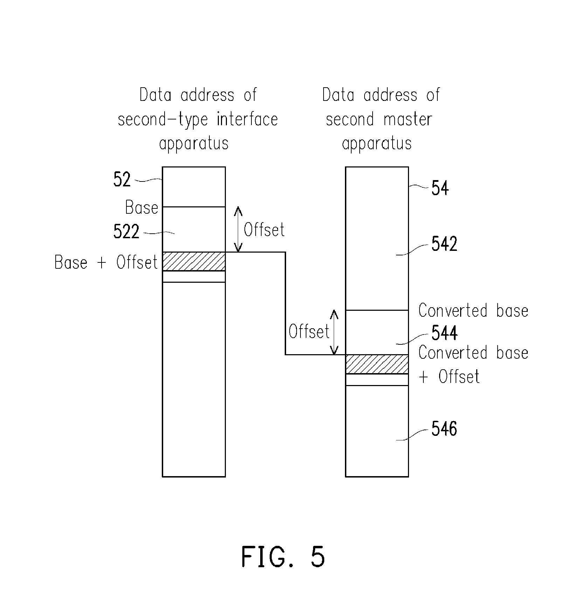

For instance, FIG. 5 is a schematic diagram illustrating address mapping according to an embodiment of the invention. Referring to FIG. 5, in the present embodiment, an address section 522 in a data address 52 of the second-type interface apparatus is converted to an address section 544 in a data address 54 of the second master apparatus to follow an address section 542 of the data of the second master apparatus itself. After the address section 544 of the second-type interface apparatus, another address section 546 of the second-type interface apparatus may be further added. A mapping relationship between the data address 52 of the second-type interface apparatus and the data address 54 of the second master apparatus may be recorded in an address mapping table. In this address mapping table, an address mapped to the data of each second-type interface apparatus 38 is continuous, and may be read by the first master apparatus 32 so as to access the data in the second-type interface apparatus.

On the other hand, the controller 342 of the second master apparatus 34 may transmit the established address mapping table to the first master apparatus 32 and store the same in the first master apparatus 32. Thus, the address mapping table may be read by the controller 322 so as to access the data stored in the second-type interface apparatus 38. Since the address mapping table is also stored in the first master apparatus 32, even though the user removes the second master apparatus 34 and directly cascades the second-type interface apparatus 38 with the first master apparatus 32, the first master apparatus 32 can still access the data in the second-type interface apparatus 38 by reading the address mapping table.

It should be mentioned that, accompanying with the address mapping table established by the controller 342, a bus switch, for example, may be further disposed in the second master apparatus 34 so as to switch data routing among the first master apparatus 32, the second master apparatus 34 and the second-type interface apparatus 38. The bus switch is disposed among the interface port 344, the interface port 346 and the controller 342 and configured to receive an access instruction transmitted by the controller 322 through the first channel and accordingly switch the data routing among the interface port 344, the interface port 346 and the controller 342, so as to change the data access path of the controller 322.

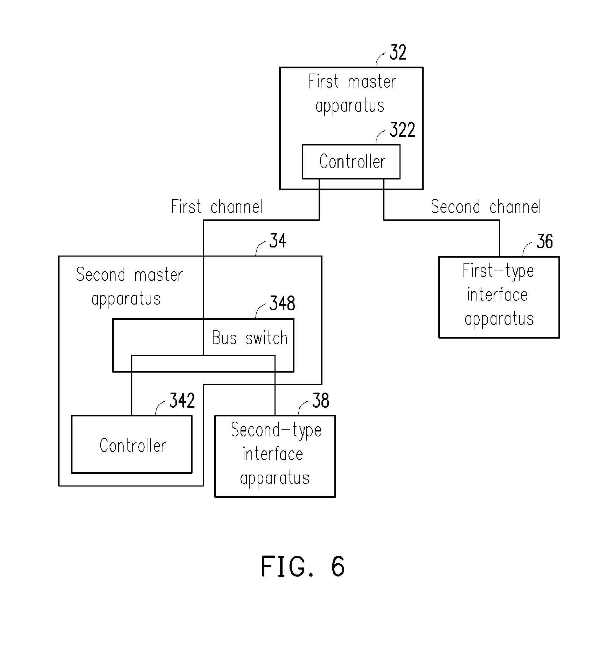

For instance, FIG. 6 is a schematic diagram illustrating peer-to-peer data transmission according to an embodiment of the invention. Referring to FIG. 6, in the present embodiment, data transmission paths of the two channels provided by the controller 342 are separately described. The data transmitted through the first channel is inputted into a bus switch 348 of the master apparatus 34, while the data transmitted through the second channel is inputted into the first-type interface apparatus 36. The first master apparatus 32 performs data transmission with the second master apparatus 34 by adopting a peer-to-peer data transmission method under a transmission bandwidth of 10 GB of the Thunderbolt interface. When the first master apparatus 32 is about to access data in the second master apparatus 34 or in the second-type interface apparatus 38 through the first channel, the first master apparatus 32, for example, reads the established address mapping table and transmits an access instruction to the switch 348. Then, according to the access instruction, the bus switch 348 bridges the controller 322 of the first master apparatus 32 to the controller 342 of the second master apparatus 34 or the controller 382 of the second-type interface apparatus 38.

It should be mentioned that under the bandwidth of 10 GB provided by the Thunderbolt interface, the first master apparatus 32 and the second master apparatus 34 can be cascaded not only through the interface port of the Thunderbolt interface, but also through a interface port of USB 3.0 interface or 10 GB Ethernet under the Thunderbolt interface architecture, both of which may achieve the effect of the peer-to-peer data transmission between dual master apparatuses.

In view of the foregoing, the data routing system supporting the dual master apparatuses of the present invention adopts the design of separating two channels of Thunderbolt interface for data transmission, uses one of the two channels provided by a master apparatus to cascade with first-type interface apparatuses, and uses the other channel to cascade with another master apparatus and second-type interface apparatuses, so as to form two device links for apparatuses at an external end and a local end to access data stored in the interface apparatuses. In addition, a peer-to-peer data transmission method is adopted for performing data transmission between two master apparatuses, and a address mapping table of data of the cascaded interface apparatuses is established on the master apparatus, so as to enable the other master apparatus to access data of the interface apparatuses which is not cascaded therewith. Accordingly, the usage flexibility and application range of the interface apparatuses can be improved.

Although the invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. A data routing system supporting dual master apparatuses, comprising:
a first master apparatus (32, 42), comprising a first controller (322) and a first interface port (324), wherein the first controller (322) provides data transmission of a first channel and a second channel through the first interface port (324);
a second master apparatus (34, 44), comprising a second controller (342), a second interface port (344) and a third interface port (346), wherein the second interface port (344) is cascaded with the first interface port (324), the second controller (342) is connected with the second interface port (344) and the third interface port (346) to transmit data with the first controller (322) through the first channel, and the third interface port (346) is connected with the second interface port (344) to transmit data of the second channel;
at least one first-type interface apparatus (36, 46), comprising a third controller (362), a fourth interface port (364) and a fifth interface port (366), wherein the fourth interface port (364) is cascaded with the third interface port (346), the third controller (362) is connected with the fourth interface port (364) and the fifth interface port (366) to transmit data with the first master apparatus (32, 42) through the second channel, and the fifth interface port (366) is connected with the fourth interface port (364) to transmit data of the first channel; and
at least one second-type interface apparatus (38, 48), comprising a fourth controller (382), a sixth interface port (384) and a seventh interface port (386), wherein the sixth interface port (384) is cascaded with the fifth interface port (366), the fourth controller (382) is connected with the sixth interface port (384) and the seventh interface port (386) to transmit data with the second master apparatus (34, 44) through the first channel, and the seventh interface port (386) is connected with the sixth interface port (384) to transmit data of the second channel,
wherein the first controller (322) transmits data with the second controller (342) through the first channel by using a peer-to-peer data transmission method.

2. The data routing system supporting the dual master apparatuses according to claim 1, wherein the second controller (342) is configured to obtain a storage address of data in each of the second-type interface apparatuses (38, 48) to establish an address mapping table, and an address on the second master apparatus (34, 44) mapped to the storage address of each of the second-type interface apparatuses (38, 48) is continuous in the address mapping table.

3. The data routing system supporting the dual master apparatuses according to claim 2, wherein the second controller (342) is further configured to transmit the address mapping table to the first master apparatus (32, 42) and store the same in the first master apparatus (32, 42) so as to enable the first controller (322) to read the address mapping table and accordingly access data stored in the second-type interface apparatus (38, 48).

4. The data routing system supporting the dual master apparatuses according to claim 2 or 3, wherein the first controller (322) is further configured to read the address mapping table so as to access the data stored in the second-type interface apparatus (38, 48).

5. The data routing system supporting the dual master apparatuses according to any one of claims 1 to 4, wherein the second master apparatus (34, 44) further comprises:
a bus switch (348), disposed among the second interface port, third interface port (346) and the second controller (342) and configured to receive an access instruction transmitted by the first controller (322) through first channel so as to switch data routing among the second interface port, the third interface port (346) and the second controller (342) and bridge the first controller (322) to the second controller (342) or the fourth controller (382) of the second-type interface apparatus (38, 48) through the first channel.

6. The data routing system supporting the dual master apparatuses according to any one of claims 1 to 5, wherein the second master apparatus (34, 44) further comprises:
a communication module, configured to connect the second controller (342), establish a communication link between the second master apparatus (34, 44) and an external apparatus and receive a request for data access to the second-type interface apparatus (38, 48) from the external apparatus so as to access the data of the second-type interface apparatus (38, 48) and provide the same to the external apparatus through the first channel.

7. The data routing system supporting the dual master apparatuses according to any one of claims 1 to 6, wherein each of the first-type interface apparatuses (36, 46) is further cascaded with the fifth interface port (366) of the first-type interface apparatus (36, 46) or the seventh interface port (386) of the second-type interface apparatus (38, 48) through the fourth interface port (364).

8. The data routing system supporting the dual master apparatuses according to any one of claims 1 to 7, wherein each of the second-type interface apparatuses (38, 48) is further cascaded with the fifth interface port (366) of the first-type interface apparatus (36, 46) or the seventh interface port (386) of the second-type interface apparatus (38, 48) through the sixth interface port (384).

9. The data routing system supporting the dual master apparatuses according to any one of claims 1 to 8, wherein the first master apparatus (32, 42), the second master apparatus (34, 44), the first-type interface apparatus (36, 46) and the second-type interface apparatus (38, 48) are cascaded by utilizing a Thunderbolt interface, a universal serial bus (USB) interface or an Ethernet interface.

10. The data routing system supporting the dual master apparatuses according to any one of claims 1 to 9, wherein the first controller (322), the second controller (342) and the third controller (362) are Thunderbolt controllers supporting dual-channel data transmission.

11. The data routing system supporting the dual master apparatuses according to any one of claims 1 to 10, wherein the first channel and the second channel are two data transmission channels of the Thunderbolt interface.

12. The data routing system supporting the dual master apparatuses according to any one of claims 1 to 11, wherein the first-type interface apparatuses (36, 46) and the second-type interface apparatuses (38, 48) comprise graphics processing apparatuses, display apparatuses, storage apparatuses, or recordable apparatuses.
